# EUROPEAN PATENT APPLICATION

(11) **EP 4 465 678 A1**
(43) Date of publication of application: **20.11.2024**
(21) Application number: 22919361.0
(22) Date of filing: 11.01.2022
(51) Int. Cl.: H04W 24/02, H04W 28/18

(54) **WLAN SENSING MEASUREMENT METHOD AND APPARATUS, ELECTRONIC DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Gunzelmann, Rainer
(86) International application number: PCT/CN2022/071409
(87) International publication number: WO 2023/133695

(57) **Abstract**

A wireless local area network (WLAN) sensing measurement method and apparatus, an electronic device, and a storage medium. The WLAN sensing measurement method is applied to an access point (AP) device, and comprises: sending a target radio frame in a WLAN sensing measurement establishment process, the target radio frame carrying a WLAN sensing measurement information element, and the WLAN sensing measurement information element indicating identity information of the AP or detection type information of the WLAN sensing measurement.

## Description

### TECHNICAL FIELD

The present disclosure relates to a field of mobile communication technologies, and particularly to a method and an apparatus for WLAN sensing measurement, an electronic device, and a storage medium.

### BACKGROUND

With the rapid development of mobile communication technologies, wireless fidelity (Wi-Fi) technology has made great progress in transmission rate, throughput, etc. At present, the research contents of Wi-Fi technology include 320MHz bandwidth transmission, aggregation and coordination of a plurality of frequency bands, etc. The main application scenarios include video transmission, augmented reality (AR), virtual reality (VR), etc.

In the Wi-Fi technology currently being studied, wireless local area network (WLAN) sensing technology may be supported, for example, application scenarios of the WLAN sensing, such as location discovery in a dense environment (such as a home environment and a corporate environment), proximity detection, and presence detection. In general, a WLAN sensing procedure includes WLAN sensing session establishment, WLAN sensing measurement establishment, WLAN sensing measurement termination, etc. In the WLAN sensing procedure, an access point (AP) and a station (STA) in the sensing measurement procedure may serve as an initiator, a receiver, and a responder, respectively. Therefore, there is a need to provide a method for indicating the role for a device in the sensing measurement procedure.

### SUMMARY

Embodiments of the present disclosure provide a method and an apparatus for WLAN sensing measurement, an electronic device, and a storage medium, so as to provide a manner for indicating a role of a device in a sensing measurement procedure.

In an aspect, embodiments of the disclosure provide a method for WLAN sensing measurement. The method is applied to an access point (AP), and includes:
sending a target radio frame in a process of establishing wireless local area network (WLAN) sensing measurement, in which the target radio frame carries a WLAN sensing measurement information element, and the WLAN sensing measurement information element indicates identity information of the AP or sounding type information of the WLAN sensing measurement.

In another aspect, embodiments of the disclosure also provide a method for WLAN sensing measurement. The method is applied to a station (STA), and includes:
receiving a target radio frame in a process of establishing wireless local area network (WLAN) sensing measurement, in which the target radio frame carries a WLAN sensing measurement information element, and the WLAN sensing measurement information element indicates identity information of the STA or sounding type information of the WLAN sensing measurement.

In another aspect, embodiments of the disclosure also provide an access point (AP). The AP includes:
a sending module, configured to send a target radio frame in a process of establishing wireless local area network (WLAN) sensing measurement, in which the target radio frame carries a WLAN sensing measurement information element, and the WLAN sensing measurement information element indicates identity information of the AP or sounding type information of the WLAN sensing measurement.

In another aspect, embodiments of the disclosure also provide a station (STA). The STA includes:
a receiving module, configured to receive a target radio frame in a process of establishing wireless local area network (WLAN) sensing measurement, in which the target radio frame carries a WLAN sensing measurement information element, and the WLAN sensing measurement information element indicates identity information of the STA or sounding type information of the WLAN sensing measurement.

In another aspect, embodiments of the disclosure also provide an apparatus for WLAN sensing measurement, applied to an access point (AP). The apparatus includes:
a radio frame sending module, configured to send a target radio frame in a process of establishing wireless local area network (WLAN) sensing measurement, in which the target radio frame carries a WLAN sensing measurement information element, and the WLAN sensing measurement information element indicates identity information of the AP or sounding type information of the WLAN sensing measurement.

In another aspect, embodiments of the disclosure also provide an apparatus for WLAN sensing measurement. The apparatus is applied to a station (STA), and includes:
a radio frame receiving module, configured to receive a target radio frame in a process of establishing wireless local area network (WLAN) sensing measurement, in which the target radio frame carries a WLAN sensing measurement information element, and the WLAN sensing measurement information element indicates identity information of the STA or sounding type information of the WLAN sensing measurement.

Embodiments of the disclosure also provide an electronic device, including: a memory, a processor, and a computer program stored on the memory and executable on the processor. When the computer program is executed by the processor, the method according to one or more of the embodiments of the disclosure is implemented.

Embodiments of the disclosure also provide a computer-readable storage medium. A computer program is stored on the computer-readable storage medium. When the computer program is executed by a processor, the method according to one or more of the embodiments of the disclosure is implemented.

In the embodiments of the present disclosure, the target radio frame is sent in the process of establishing the wireless local area network (WLAN) sensing measurement, in which the target radio frame carries the WLAN sensing measurement information element, and the WLAN sensing measurement information element indicates the identity information of the AP or the sounding type information of the WLAN sensing measurement, thereby indicating the role of the device in the sensing measurement process by the identity information or the sounding type.

Additional aspects and advantages of the embodiments of the disclosure may be partially given in the description below, which may become apparent from the description below, or will be learned through the practice of the disclosure.

### BRIEF DESCRIPTION OF THE DRAWINGS

In order to more clearly illustrate the technical solutions of embodiments of the disclosure, the drawings required for use in the description of the embodiments of the disclosure may be briefly introduced below Obviously, the drawings in the following description are only some embodiments of the disclosure. For those skilled in the art, other drawings may be obtained based on these drawings without creative works.
FIG. 1 is a first flowchart of a method for WLAN sensing measurement according to an embodiment of the disclosure.
FIG. 2 is a first diagram of a first example according to an embodiment of the disclosure.
FIG. 3 is a second diagram of the first example according to an embodiment of the disclosure.
FIG. 4 is a third diagram of the first example according to an embodiment of the disclosure.
FIG. 5 is a second flowchart of a method for WLAN sensing measurement according to an embodiment of the disclosure.
FIG. 6 is a diagram of a second example according to an embodiment of the disclosure.
FIG. 7 is a third flowchart of a method for WLAN sensing measurement according to an embodiment of the disclosure.
FIG. 8 is a fourth flowchart of a method for WLAN sensing measurement according to an embodiment of the disclosure.
FIG. 9 is a fifth flowchart of a method for WLAN sensing measurement according to an embodiment of the disclosure.
FIG. 10 is a sixth flowchart of a method for WLAN sensing measurement according to an embodiment of the disclosure.
FIG. 11 is a structure diagram of an access point according to an embodiment of the disclosure.
FIG. 12 is a structure diagram of a station according to an embodiment of the disclosure.
FIG. 13 is a structure diagram of an electronic device according to an embodiment of the disclosure.

### DETAILED DESCRIPTION

In the embodiments of the disclosure, the term "and/or" describes an association relationship of associated objects, indicating that three relationships may exist. For example, A and/or B may represent three situations: A exists alone, A and B exist at the same time, and B exists alone. The character "/" generally represents that the previous and next associated objects are in an "or" relationship.

The term "a plurality of" in the embodiments of the disclosure refers to two or more than two, and other quantifiers are similar thereto.

Reference will now be made in detail to exemplary embodiments, examples of which are illustrated in the accompanying drawings. When the following description refers to the drawings, unless otherwise indicated, the same numbers in different drawings represent the same or similar elements. The implementations described in the following exemplary embodiments do not represent all the implementations consistent with the present invention. Rather, they are merely examples of apparatus and methods consistent with some aspects of the present invention as recited in the appended claims.

The term used in the disclosure is only for the purpose of describing particular embodiments and is not intended to limit the disclosure. As used in the disclosure and the appended claims, the singular forms "a/an" "said" and "this" are intended to include the plural forms as well, unless the context clearly indicates otherwise. It should also be understood that the term "and/or" used herein refers to and encompasses any and all possible combinations of one or more of the associated listed items.

It should be understood that although the terms first, second, third, etc. may be used in the disclosure to describe various information, such information should not be limited to these terms. These terms are used only to distinguish information of the same type from one another. For example, without departing from the scope of the disclosure, first information may also be referred to as second information, and similarly, second information may also be referred to as first information. Depending on the context, for example, the word "if" as used herein may be interpreted as "when" or "in a case that " or "in response to determining that".

The technical solutions in the embodiments of the disclosure may be clearly and completely described below in conjunction with the drawings in the embodiments of the disclosure. Obviously, the described embodiments are only a part of the embodiments of the disclosure, not all of the embodiments. Based on the embodiments in the disclosure, all other embodiments obtained by those skilled in the art without making any creative works may fall within the scope of protection of the disclosure.

The embodiments of the disclosure provide a method and an apparatus for WLAN sensing measurement, an electronic device, and a storage medium, which are used to provide a method for indicating the role of a device in a sensing measurement procedure.

The method and the apparatus are based on the same invention concept. Since the method and the apparatus solve the problem in a similar principle, the implementation of the apparatus and the method can refer to each other, and the repeated parts will not be repeated.

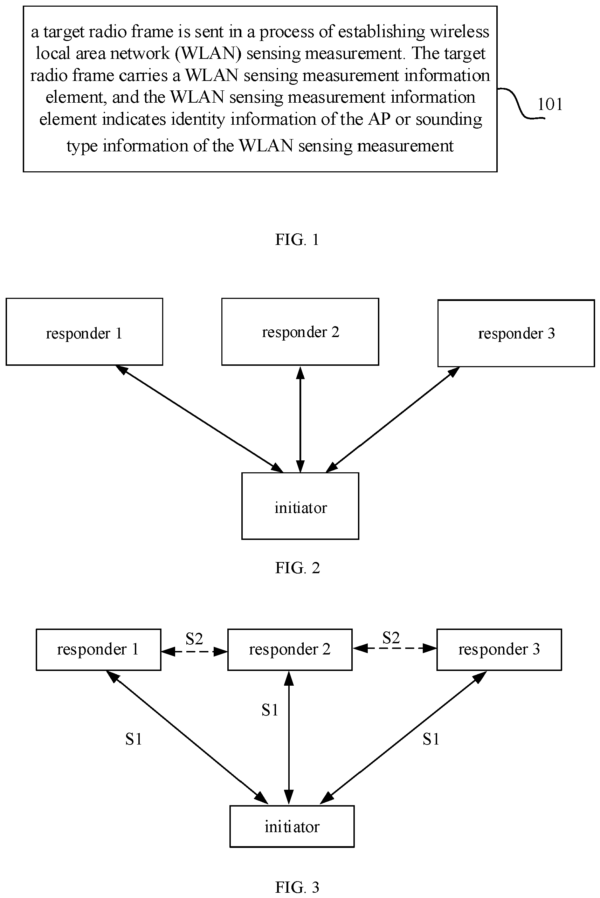

As shown in FIG. 1, an embodiment of the disclosure provides a method for WLAN sensing measurement. Optionally, the method is applicable to an access point (AP). The method may include the following step.

At step 101, a target radio frame is sent in a process of establishing wireless local area network (WLAN) sensing measurement. The target radio frame carries a WLAN sensing measurement information element, and the WLAN sensing measurement information element indicates identity information of the AP or sounding type information of the WLAN sensing measurement.

As a first example, referring to FIG. 2 to FIG. 4, a WLAN sensing architecture and a WLAN sensing procedure for the method for WLAN sensing measurement according to the embodiment of the disclosure are first introduced.

FIG. 2 illustrates an architecture diagram of a WLAN sensing procedure. A sensing initiator (or an initiator) initiates WLAN sensing (for example, initiating a WLAN sensing session), and there may be a plurality of sensing responders (or sensing receivers) or responders that make a response, such as, responder 1, responder 2, and responder 3 shown in FIG. 2. When the sensing initiator initiates WLAN sensing, a plurality of associated or unassociated sensing responders for WLAN sensing may make responses.

Referring to FIG. 3, the sensing initiator communicates with the sensing responders via a communication connection, such as the shown communication connection S1; the sensing responders communicate with each other via a communication connection S2.

Each sensing initiator may be a client. Each sensing responder (in this example, sensing responder 1 to sensing responder 3) may be a station (STA) or an access point (AP). In addition, the STA and the AP may take a plurality of roles in the WLAN sensing procedure. For example, in the WLAN sensing procedure, the STA may also serve as a sensing initiator that may be a sensing transmitter, a sensing receiver, both the sensing transmitter and the sensing receiver, or neither the sensing transmitter nor the sensing receiver. In the WLAN sensing procedure, the sensing responder may also be a sensing transmitter, a sensing receiver, or both the sensing transmitter and the sensing receiver.

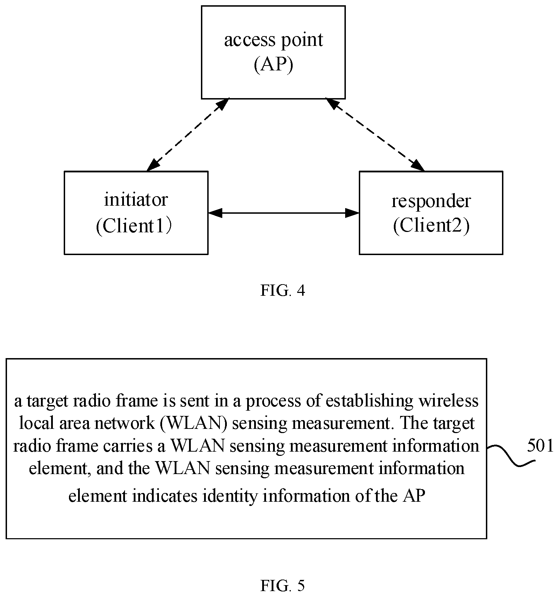

In another architecture, as shown in FIG. 4, both the sensing initiator and the sensing responder may be clients, and the sensing initiator and the sensing responder may communicate with each other by connecting to a same AP. In FIG. 4, client 1 is the sensing initiator, and client 2 is the sensing responder.

Generally, the WLAN sensing procedure includes WLAN sensing session establishment, WLAN sensing measurement establishment, WLAN sensing measurement termination, etc. The WLAN sensing procedure generally includes a triggered based (TB) sensing mode and a non-TB based sensing mode. Specifically, the TB-based mode means that the AP is an initiator or a transmitter, and the non-TB based mode means that the STA is an initiator or a transmitter.

Specifically, different identity information/sensing sounding types play different roles in the sensing measurement procedure, and the role of a device in the sensing measurement procedure may be indicated by the identity information or the sounding type. In a process of establishing the WLAN sensing measurement in a TB-based scenario, the AP sends the target radio frame. Optionally, the target radio frame may be an action frame. The target radio frame carries a WLAN sensing measurement information element, and the WLAN sensing measurement information element indicates the identity information of the AP or the sounding type information of the WLAN sensing measurement. The sounding type information indicates a sensing sounding type. For example, the identity information of the AP in the sensing measurement or the sounding type is identified in a bit/subfield of the WLAN sensing measurement information element.

The identity information of the AP includes indication information of at least one of a sensing transmitter and/or a sensing receiver. In a case that the WLAN sensing measurement information element indicates the identity information of the AP, a role for the AP in the sensing measurement procedure is explicitly indicated, and a sensing sounding type is implicitly indicated. Different identity information corresponds to different sensing sounding types, for example, in a case that the AP is a transmitter, the sensing sounding type is implicitly identified as null data packet announcement (NDPA) sounding.

Accordingly, different sensing sounding types also implicitly indicate the identity information of the AP. For example, in a case that the sensing sounding type is trigger frame (TF) sounding, the identity information of the AP is the receiver; in a case that the sensing sounding type is NDPA sounding, the identity information of the AP is the transmitter.

Thus, the role of the device in the sensing measurement procedure can be indicated through indicating by the WLAN sensing measurement information element the identity information of the AP or the sounding type information of the WLAN sensing measurement.

Referring to FIG. 5, an embodiment of the disclosure further provides a method for WLAN sensing measurement, which is applicable to an access point (AP). The method may include the following step.

At step 501, a target radio frame is sent in a process of establishing wireless local area network (WLAN) sensing measurement. The target radio frame carries a WLAN sensing measurement information element, and the WLAN sensing measurement information element indicates identity information of the AP

The identity information of the AP includes indication information of at least one of a sensing transmitter and/or a sensing receiver. In a case that the WLAN sensing measurement information element indicates the identity information of the AP, a role for the AP in the sensing measurement procedure is explicitly indicated, and the sensing sounding type is implicitly indicated. Different identity information corresponds to different sensing sounding types, for example, in a case that the AP is a transmitter, the sensing sounding type is implicitly identified as NDPA sounding. Thus, the role of the device in the sensing measurement procedure can be indicated through indicating by the WLAN sensing measurement information element the identity information of the AP.

Optionally, in an embodiment of the present disclosure, after sending the target radio frame, the method further includes situation one, situation two, or situation three.

In the situation one, a null data packet (NDP) frame is sent in a case that the identity information includes the indication information of the transmitter. For example, the identity information is identified with two bits, in which "00" identifies the AP as a transmitter, then it is implicitly identified that the sounding type information is NDPA sounding, and then the AP sends the NDP frame.

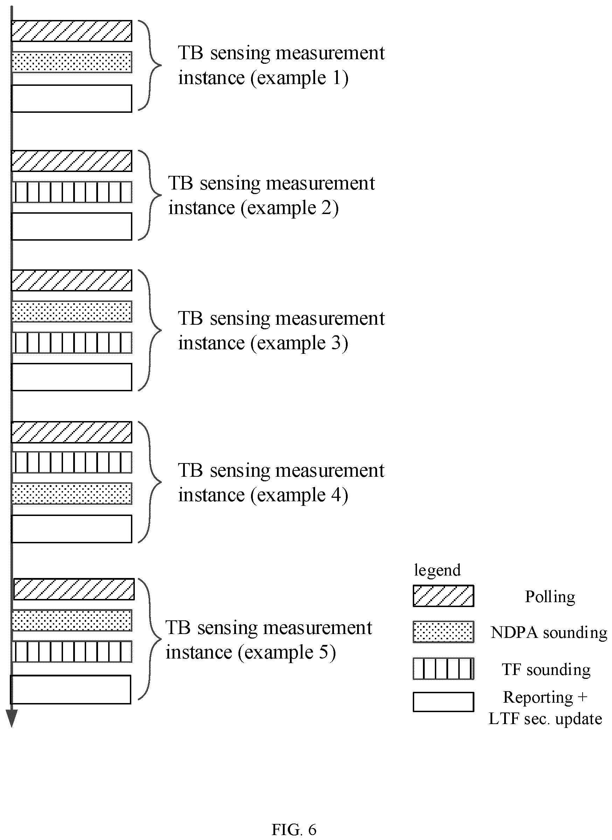

As a second example, referring to FIG. 6, which illustrates a plurality of sensing measurement instances for the sensing measurement. In example 1 to example 5, the sensing measurement procedure includes polling, sounding, and reporting (Reporting + LTF sec. update) processes; in each example, the sounding may include only NDPA sounding or TF sounding, or both. The situation one includes only the NDPA sounding as shown in example 1 in FIG. 6.

In the situation two, a NDP frame is received in a case that the identity information includes the indication information of the receiver. For example, "01" identifies the AP as a receiver, then it is implicitly identified that the sounding type information is TF sounding, and then the AP receives the NDP frame.

Referring to FIG. 6, the situation two includes only the TF sounding as shown in example 2 in FIG. 6.

In the situation three, in a case that the identity information includes the indication information of the transmitter and the receiver, first sounding order information carried in the WLAN sensing measurement information element is obtained, and sensing sounding is processed based on the first sounding order information.

Optionally, the first sounding order information indicates a processing order of the trigger frame (TF) sounding and the null data packet announcement (NDPA) sounding. For example, "11" identifies the AP as both a transmitter and a receiver, the first sounding order information may be used to identify a sequence of the NDPA sounding and the TF sounding. The first sounding order information may be identified with 1 bit. For example, "0" identifies that the NDPA sounding is processed first, as shown in example 3 and example 5 in FIG. 6, and "1" identifies the TF sounding is processed first, as shown in example 4 in FIG. 6.

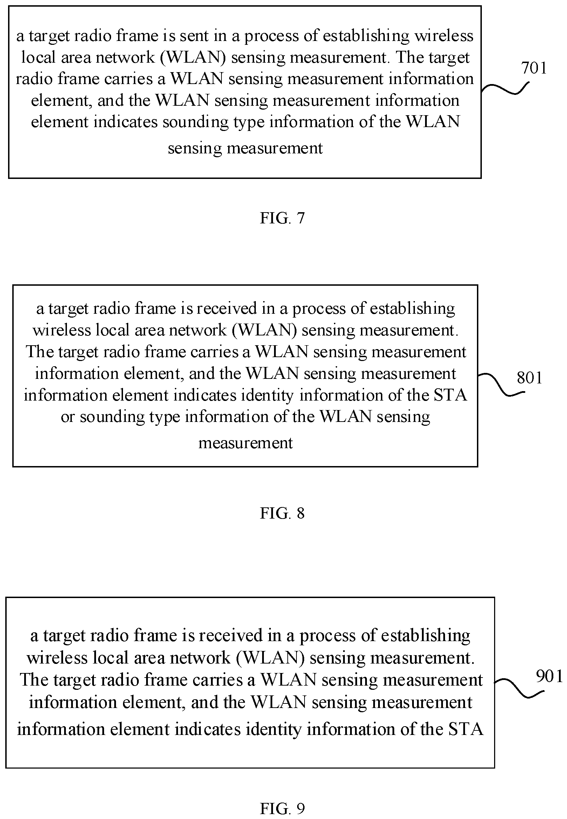

Referring to FIG. 7, an embodiment of the disclosure further provides a method for WLAN sensing measurement, which is applicable to an access point (AP). The method may include the following step.

At step 701, a target radio frame is sent in a process of establishing wireless local area network (WLAN) sensing measurement. The target radio frame carries a WLAN sensing measurement information element, and the WLAN sensing measurement information element indicates sounding type information of the WLAN sensing measurement.

Different sensing sounding types play different roles in the sensing measurement procedure, and a role of the device in the sensing measurement procedure may be indicated by the sounding type. For example, in a case that the sensing sounding type is trigger frame (TF) sounding, the identity information of the AP is a receiver; in a case that the sensing sounding type is NDPA sounding, the identity information of the AP is a transmitter.

Thus, the role of the device in the sensing measurement procedure can be indicated through indicating by the WLAN sensing measurement information element the identity information of the AP or the sounding type information of the WLAN sensing measurement.

Optionally, in an embodiment of the present disclosure, after sending the target radio frame, the method further includes situation four, situation five, or situation six.

In the situation four, a NDP frame is sent in a case that the sounding type information includes NDPA sounding. For example, the sounding type information is identified with two bits, in which "00" identifies the sounding type information as the NDPA sounding, then the AP is implicitly identified as a transmitter, then the AP sends the NDP frame. As a second example, referring to FIG. 6, which illustrates a plurality of sensing measurement instances for the sensing measurement. In example 1 to example 5, the sensing measurement procedure includes polling, sounding, and reporting (reporting + LTF sec. update) processes. In each example, the sounding may include only NDPA sounding or TF sounding; or both. The situation four includes only the NDPA sounding, as shown in example 1 in FIG. 6.

In the situation five, the NDP frame is received in a case that the sounding type information includes TF sounding. For example, "01" identifies the sounding type information as the TF sounding, then the AP is implicitly identified as the receiver, and the AP receives the NDP frame. Referring to FIG. 6, the situation five includes only the TF sounding, as shown in example 2 in FIG. 6.

In the situation six, in a case that the sounding type information includes the NDPA sounding and the TF sounding, second sounding order information carried in the WLAN sensing measurement information element is obtained, and sensing sounding is processed based on the second sounding order information.

Optionally, the second sounding order information indicates a processing order of the TF sounding and the NDPA sounding. For example, "11" identifies that the AP sends both the NDPA frame and the TF frame, and the second sounding order information may be used to identify a sequence of the NDPA sounding and the TF sounding. The second sounding order information may be identified with 1 bit. For example, "0" identifies the NDPA sounding is processed first, as shown in example 3 and example 5 in FIG. 6, and " 1" identifies the TF sounding is processed first, as shown in example 4 in FIG. 6.

In the embodiments of the present disclosure, the target radio frame is sent in the process of establishing the WLAN sensing measurement, in which the target radio frame carries the WLAN sensing measurement information element, and the WLAN sensing measurement information element indicates the identity information of the AP or the sounding type information of the WLAN sensing measurement, thereby the role of the device in the sensing measurement procedure is indicated by the identity information or the sounding type.

Referring to FIG. 8, an embodiment of the disclosure further provides a method for WLAN sensing measurement, which is applicable to a station (STA). The method may include the following step.

At step 801, a target radio frame is received in a process of establishing wireless local area network (WLAN) sensing measurement. The target radio frame carries a WLAN sensing measurement information element, and the WLAN sensing measurement information element indicates identity information of the STA or sounding type information of the WLAN sensing measurement.

A WLAN sensing architecture and a WLAN sensing procedure in which the method for WLAN sensing measurement is applied refer to the first example, which will not be repeated here.

Generally, the WLAN sensing procedure includes WLAN sensing session establishment, WLAN sensing measurement establishment, WLAN sensing measurement termination, etc. The WLAN sensing procedure generally includes a triggered based (TB) sensing mode and a non-TB based sensing mode. The TB-based mode means that the AP is an initiator or a transmitter, and the non-TB based mode means that the STA is an initiator or a transmitter.

Specifically, different identity information/sensing sounding types play different roles in the sensing measurement procedure, and the role of a device in the sensing measurement procedure may be indicated by the identity information or the sounding type. In a process of establishing the WLAN sensing measurement in a TB-based scenario, the STA receives the target radio frame. Optionally, the target radio frame may be an action frame. The target radio frame carries a WLAN sensing measurement information element, and the WLAN sensing measurement information element indicates the identity information of the STA or the sounding type information of the WLAN sensing measurement. The sounding type information indicates a sensing sounding type. For example, the identity information of the STA in the sensing measurement or the sounding type is identified in a bit/subfield of the WLAN sensing measurement information element.

The identity information of the STA includes indication information of at least one of a sensing transmitter and/or a sensing receiver. In a case that the WLAN sensing measurement information element indicates the identity information of the STA, a role for the STA in the sensing measurement procedure is explicitly indicated, and a sensing sounding type is implicitly indicated. Different identity information corresponds to different sensing sounding types, for example, in a case that the STA is a receiver, the sensing sounding type is implicitly identified as null data packet announcement (NDPA) sounding.

Accordingly, different sensing sounding types also implicitly indicate the identity information of the STA. For example, in a case that the sensing sounding type is trigger frame (TF) sounding, the identity information of the STA is the transmitter; in a case that the sensing sounding type is NDPA sounding, the identity information of the STA is the receiver.

Thus, the role of the device in the sensing measurement procedure can be indicated through indicating by the WLAN sensing measurement information element the identity information of the STA or the sounding type information of the WLAN sensing measurement.

Referring to FIG. 9, an embodiment of the disclosure further provides a method for WLAN sensing measurement, which is applicable to a station (STA). The method may include the following step.

At step 901, a target radio frame is received in a process of establishing wireless local area network (WLAN) sensing measurement. The target radio frame carries a WLAN sensing measurement information element, and the WLAN sensing measurement information element indicates identity information of the STA.

The identity information of the STA includes indication information of at least one of a sensing transmitter and/or a sensing receiver. In a case that the WLAN sensing measurement information element indicates the identity information of the STA, a role for the STA in the sensing measurement procedure is explicitly indicated, and the sensing sounding type is implicitly indicated. Different identity information corresponds to different sensing sounding types, for example, in a case that the STA is a receiver, the sensing sounding type is implicitly identified as NDPA sounding.

Accordingly, different sensing sounding types also implicitly indicate the identity information of the STA. For example, in a case that the sensing sounding type is the TF sounding, the identity information of the STA is a transmitter; in a case that the sensing sounding type is the NDPA sounding, the identity information of the STA is a receiver.

Thus, the role of the device in the sensing measurement procedure can be indicated through indicating by the WLAN sensing measurement information element the identity information of the STA or the sounding type information of the WLAN sensing measurement.

Optionally, in an embodiment of the present disclosure, after receiving the target radio frame, the method further includes scenario one, scenario two, or scenario three.

In the scenario one, a null data packet (NDP) frame is received in a case that the identity information includes the indication information of the receiver. For example, the identity information is identified with two bits, in which "00" identifies the STA as a receiver, then it is implicitly identified that the sounding type information is NDPA sounding, and then the STA sends the NDP frame. The scenario one includes only the NDPA sounding as shown in example 1 in FIG. 6.

In the scenario two, a NDP frame is sent in a case that the identity information includes the indication information of the transmitter. For example, "01" identifies the STA as a transmitter, then it is implicitly identified that the sounding type information is TF sounding, and then the STA receives the NDP frame.

Referring to FIG. 6, the scenario two includes only the TF sounding as shown in example 2 in FIG. 6.

In the scenario three, in a case that the identity information includes the indication information of the transmitter and the receiver, first sounding order information carried in the WLAN sensing measurement information element is obtained, and sensing sounding is processed based on the first sounding order information. Optionally, the first sounding order information indicates a processing order of the trigger frame (TF) sounding and the null data packet announcement (NDPA) sounding. For example, "11" identifies both the NDPA sounding and the TF sounding are processed, and the first sounding order information may be used to identify a sequence of the NDPA sounding and the TF sounding. The first sounding order information may be identified with 1 bit. For example, "0" identifies that the NDPA sounding is processed first, as shown in example 3 and example 5 in FIG. 6, and "1" identifies the TF sounding is processed first, as shown in example 4 in FIG. 6.

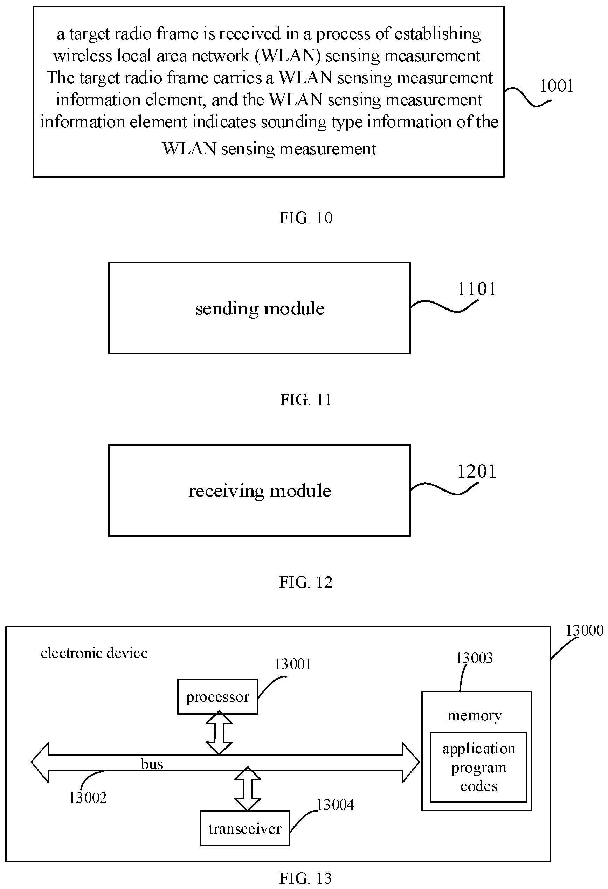

Referring to FIG. 10, an embodiment of the disclosure further provides a method for WLAN sensing measurement, which is applied to a station (STA). The method may include the following step.

At step 1001, a target radio frame is received in a process of establishing wireless local area network (WLAN) sensing measurement. The target radio frame carries a WLAN sensing measurement information element, and the WLAN sensing measurement information element indicates sounding type information of the WLAN sensing measurement.

Different sensing sounding types play different roles in the sensing measurement procedure, and a role of the device in the sensing measurement procedure may be indicated by the sounding type. For example, in a case that the sensing sounding type is trigger frame (TF) sounding, accordingly, different sensing sounding types also implicitly indicate the identity information of the STA. For example, in a case that the sensing sounding type is trigger frame (TF) sounding, the identity information of the STA is a transmitter; in a case that the sensing sounding type is NDPA sounding, the identity information of the STA is a receiver.

Thus, the role of the device in the sensing measurement procedure can be indicated through indicating by the WLAN sensing measurement information element the identity information of the STA or the sounding type information of the WLAN sensing measurement.

Optionally, in an embodiment of the present disclosure, after sending the target radio frame, the method further includes scenario four, scenario five, or scenario six.

In the scenario four, a NDP frame is received in a case that the sounding type information includes NDPA sounding. For example, the sounding type information is identified with two bits, in which "00" identifies the sounding type information as the NDPA sounding, then the AP is implicitly identified as a transmitter, then the AP sends the NDP frame.

In the scenario five, the NDP frame is sent in a case that the sounding type information includes TF sounding. For example, "01" identifies the sounding type information as the TF sounding, then the AP is implicitly identified as the receiver, and the AP receives the NDP frame. Referring to FIG. 6, the scenario five includes only the TF sounding, as shown in example 2 in FIG. 6.

In the scenario six, in a case that the sounding type information includes the NDPA sounding and the TF sounding, second sounding order information carried in the WLAN sensing measurement information element is obtained, and sensing sounding is processed based on the second sounding order information. Optionally, the second sounding order information indicates a processing order of the TF sounding and the NDPA sounding. For example, "11" identifies that both the NDPA sounding and the TF sounding are processed, and the second sounding order information may be used to identify a sequence of the NDPA sounding and the TF sounding. The second sounding order information may be identified with 1 bit. For example, "0" identifies the NDPA sounding is processed first, as shown in example 3 and example 5 in FIG. 6, and "1" identifies the TF sounding is processed first, as shown in example 4 in FIG. 6.

In the embodiments of the present disclosure, the target radio frame is received in the process of establishing the WLAN sensing measurement, in which the target radio frame carries the WLAN sensing measurement information element, and the WLAN sensing measurement information element indicates the identity information of the AP or the sounding type information of the WLAN sensing measurement, thereby the role of the device in the sensing measurement procedure is indicated by the identity information or the sounding type.

Referring to FIG. 11, an embodiment of the disclosure further provides a station (STA), which includes:

a sending module 1101, configured to send a target radio frame in a process of establishing wireless local area network (WLAN) sensing measurement, in which the target radio frame carries a WLAN sensing measurement information element, and the WLAN sensing measurement information element indicates identity information of the AP or sounding type information of the WLAN sensing measurement.

In an optional embodiment, the identity information includes indication information of a sensing transmitter and/or a sensing receiver.

In an optional embodiment, the access point further includes:
a first processing module, configured to send a null data packet (NDP) frame in a case that the identity information includes the indication information of the transmitter;
to receive an NDP frame in a case that the identity information includes the indication information of the receiver;
   or
to obtain first sounding order information carried in the WLAN sensing measurement information element and process sensing sounding based on the first sounding order information, in a case that the identity information includes the indication information of the transmitter and the receiver.

In an optional embodiment, the first sounding order information indicates a processing order of trigger frame (TF) sounding and null data packet announcement (NDPA) sounding.

In an optional embodiment, the access point device further includes:
a second processing module, configured to send an NDP frame in a case that the sounding type information includes NDPA sounding;
to receive an NDP frame in a case that the sounding type information includes TF sounding;
   or
to obtain second sounding order information carried in the WLAN sensing measurement information element and process sensing sounding based on the second sounding order information, in a case that the sounding type information includes NDPA sounding and TF sounding.

In an optional embodiment, the second sounding order information indicates a processing order of the TF sounding and the NDPA sounding.

In the embodiments of the present disclosure, the sending module 1101 sends the target radio frame in the process of establishing the wireless local area network (WLAN) sensing measurement, in which the target radio frame carries the WLAN sensing measurement information element, and the WLAN sensing measurement information element indicates the identity information of the AP or the sounding type information of the WLAN sensing measurement, thereby indicating the role of the device in the sensing measurement procedure by the identity information or the sounding type.

An embodiment of the disclosure further provides an apparatus for WLAN sensing measurement, which is applied to an access point (AP). The apparatus includes:
a radio frame sending module, configured to send a target radio frame in a process of establishing wireless local area network (WLAN) sensing measurement, in which the target radio frame carries a WLAN sensing measurement information element, and the WLAN sensing measurement information element indicates identity information of the AP or sounding type information of the WLAN sensing measurement.

The apparatus also includes other modules of the STA in the aforementioned embodiments, which will not be described in detail here.

Referring to FIG. 12, an embodiment of the disclosure further provides a station (STA), which includes:
a receiving module 1201, configured to receive a target radio frame in a process of establishing wireless local area network (WLAN) sensing measurement, in which the target radio frame carries a WLAN sensing measurement information element, and the WLAN sensing measurement information element indicates identity information of the STA or sounding type information of the WLAN sensing measurement.

In an optional embodiment, the identity information includes indication information of a sensing receiver and/or a sensing transmitter.

In an optional embodiment, the station device further includes:
a first processing module, configured to receive a null data packet (NDP) frame in a case that the identity information includes the indication information of the receiver;
to send an NDP frame in a case that the identity information includes the indication information of the transmitter;
   or
to obtain first sounding order information carried in the WLAN sensing measurement information element and process sensing sounding based on the first sounding order information, in a case that the identity information includes the indication information of the transmitter and the receiver.

In an optional embodiment, the first sounding order information indicates a processing order of trigger frame (TF) sounding and null data packet announcement (NDPA) sounding.

In an optional embodiment, the station device further includes:
a second processing module, configured to receive an NDP frame in a case that the sounding type information includes NDPA sounding;
to send an NDP frame in a case that the sounding type information includes TF sounding
   or
to obtain second sounding order information carried in the WLAN sensing measurement information element and process sensing sounding based on the second sounding order information, in a case that the sounding type information includes NDPA sounding and TF sounding.

In an optional embodiment, the second sounding order information indicates a processing order of the TF sounding and the NDPA sounding.

In the embodiments of the present disclosure, the receiving module 1201 receives the target radio frame in the process of establishing the wireless local area network (WLAN) sensing measurement, in which the target radio frame carries the WLAN sensing measurement information element, and the WLAN sensing measurement information element indicates the identity information of the AP or the sounding type information of the WLAN sensing measurement, thereby indicating the role of the device in the sensing measurement procedure by the identity information or the sounding type.

An embodiment of the disclosure further provides an apparatus for WLAN sensing measurement, which is applied to a STA, and the apparatus includes:
a radio frame receiving module, configured to receive a target radio frame in a process of establishing wireless local area network (WLAN) sensing measurement, in which the target radio frame carries a WLAN sensing measurement information element, and the WLAN sensing measurement information element indicates identity information of the STA or sounding type information of the WLAN sensing measurement.

The apparatus also includes other modules of the STA in the aforementioned embodiments, which will not be described in detail here.

In an optional embodiment, the disclosure further provides an electronic device, as shown in FIG. 13. The electronic device 13000 shown in FIG. 13 may be a server, including: a processor 13001 and a memory 13003. The processor 13001 and the memory 13003 are connected, for example, via a bus 13002. Optionally, the electronic device 13000 may further include a transceiver 13004. It should be noted that in actual applications, the transceiver 13004 is not limited to one, and the structure of the electronic device 13000 does not constitute a limitation on the embodiments of the disclosure.

The processor 13001 may be a central processing unit (CPU), a general-purpose processor, a digital signal processor (DSP), an application specific integrated circuit (ASIC), a field programmable gate array (FPGA) or other programmable logic devices, transistor logic devices, hardware components or any combination. The processor 13001 may implement or execute various exemplary logical blocks, modules, and circuits described in conjunction with the contents of the disclosure. The processor 13001 may also be a combination that implements computing functions, such as a combination of one or more microprocessors, a combination of DSP and microprocessor, etc.

The bus 13002 may include a path to transmit information between the above components. The bus 13002 may be a peripheral component interconnect (PCI) bus or an extended industry standard architecture (EISA) bus, etc. The bus 13002 may be divided into an address bus, a data bus, a control bus, etc. For ease of representation, FIG. 13 illustrates only one thick line, but this does not mean that there is only one bus or one type of bus.

The memory 13003 may be a read only memory (ROM) or other types of static storage devices that may store static information and instructions, a random access memory (RAM) or other types of dynamic storage devices that may store information and instructions, or it may be an electrically erasable programmable read only memory (EEPROM), a compact disc read only memory (CD-ROM) or other optical disk storage, an optical disk storage (including a compressed optical disk, a laser disk, an optical disk, a digital versatile disk, a Blu-ray disk, etc.), a magnetic disk storage medium or other magnetic storage device, or any other medium that may be used to carry or store the desired program codes in the form of instructions or data structures and may be accessed by a computer, but is not limited thereto.

The memory 13003 is configured to store application program codes for executing the solution of the disclosure, and the execution is controlled by the processor 13001. The processor 13001 is used to execute the application codes stored in the memory 13003 to implement the contents shown in the aforementioned method embodiments.

The electronic device includes but is not limited to: a mobile terminal such as a mobile phone, a laptop, a digital broadcast receiver, a personal digital assistant (PDA), a tablet computer (PAD), a portable multimedia player (PMP), a vehicle-mounted terminal (such as a vehicle-mounted navigation terminal), etc., and a fixed terminal such as a digital TV, a desktop computer, etc. The electronic device shown in FIG. 13 is merely an example and should not limit the functions and usage scope of the embodiments of the disclosure.

The server according to the disclosure may be an independent physical server, a server cluster or a distributed system composed of a plurality of physical servers, or a cloud server that provides basic cloud computing services such as cloud services, cloud databases, cloud computing, cloud functions, cloud storage, network services, cloud communications, middleware services, domain name services, security services, CDN, as well as big data and artificial intelligence platforms. The terminal may be a smart phone, a tablet computer, a laptop computer, a desktop computer, a smart speaker, a smart watch, etc., but is not limited thereto. The terminal and the server may be connected directly or indirectly via wired or wireless communication, which is not limited in the disclosure.

An embodiment of the disclosure provides a computer-readable storage medium, on which a computer program is stored. When the computer program is run on a computer, the computer is enabled to execute the corresponding contents of the aforementioned method embodiments.

It should be understood that, although the steps in the flowchart of the accompanying drawings are displayed sequentially as indicated by the arrows, these steps are not necessarily executed sequentially in an order indicated by the arrows. Unless otherwise specified herein, there is no strict order limitation for the execution of these steps and they may be executed in other orders. Moreover, at least part of the steps in the flowchart of the accompanying drawings may include a plurality of sub-steps or a plurality of stages. These sub-steps or stages are not necessarily executed at the same time, but may be executed at different times. The order of execution is not necessarily sequential, but may be executed in turn or alternately with other steps or at least part of the sub-steps or stages of other steps.

It should be noted that the above mentioned computer-readable medium in the disclosure may be a computer-readable signal medium or a computer-readable storage medium or any combination of the two. A computer readable storage medium may be, for example but not limited to, an electronic, magnetic, optical, electromagnetic, infrared, or semiconductor system, apparatus, or device, or any combination of the foregoing. The more specific examples of computer-readable storage media may include, but are not limited to, an electrical connection having one or more conductors, a portable computer disk, a hard disk, a random access memory (RAM), a read-only memory (ROM), an erasable programmable read-only memory (EPROM or flash memory), optical fibers, a portable compact disk-read-only memory (CD-ROM), an optical storage device, a magnetic storage device, or any suitable combination of the foregoing. In the disclosure, a computer readable storage medium may be any tangible medium that can contain or store a program for use by or in connection with an instruction execution system, apparatus, or device. In the disclosure, a computer-readable signal medium may include a data signal propagated in a baseband or as a part of a carrier wave, in which computer-readable program codes are carried. Such a propagated data signal may take a variety of forms, including but not limited to electromagnetic signals, optical signals, or any suitable combination of the foregoing. The computer-readable signal media may also be any computer-readable media other than computer-readable storage media, which may send, propagate or transport a program for use by or in conjunction with an instruction execution system, apparatus or device. The program code embodied on the computer readable medium may be transmitted using any appropriate medium, including but not limited to: a wire, an optical cable, a radio frequency (RF), etc., or any suitable combination of the foregoing.

The computer-readable medium may be included in the electronic device, or may exist independently without being incorporated into the electronic device.

The computer-readable medium carries one or more programs. When the one or more programs are executed by the electronic device, the electronic device executes the method shown in the above embodiments.

According to an aspect of the disclosure, there is provided a computer program product or a computer program, including computer instructions stored in a computer-readable storage medium. A processor of a computer device reads the computer instructions from the computer-readable storage medium and executes the computer instructions, to cause the computer device to perform the method in the above various optional implementations.

The computer program codes for performing operations of the disclosure may be written in one or more programming languages or their combination, including object-oriented programming languages such as Java, Smalltalk, C++, and conventional procedural programming languages such as "C" or similar programming languages. The program codes may be executed entirely on a user computer, partly on the user computer, as a stand-alone software package, partly on the user computer and partly on a remote computer or entirely on the remote computer or server. In a case of involving a remote computer, the remote computer may be connected to the user computer through any type of network, including a local area network (LAN) or a wide area network (WAN), or may be connected to an external computer (e.g., through the Internet using an Internet service provider).

The flowcharts and block diagrams in the accompanying drawings illustrate possible implementation architectures, functions, and operations of systems, methods, and computer program products according to various embodiments of the disclosure. In this regard, each block in the flowchart or block diagram may represent a module, a program segment, or a portion of codes, which contains one or more executable instructions for implementing the specified logical functions. It should also be noted that, in some alternative implementations, the functions noted in the block may occur out of the order noted in the figures. For example, two blocks shown in succession may actually be executed substantially in parallel, or they may sometimes be executed in the reverse order, depending on the functionality involved. It should also be noted that each block in the block diagram and/or flowchart, and a combination of blocks in the block diagram and/or flowchart, may be implemented by a dedicated hardware-based system that performs the specified functions or operations, or may be implemented by a combination of dedicated hardware and computer instructions.

The modules involved in the embodiments described in the disclosure may be implemented in software or hardware. The name of a module does not, in some cases, constitute a limitation on the module itself. For example, module A may also be described as "module A for performing operation B".

The above description is only preferred embodiments of the disclosure and an illustration of the technical principles used. Those skilled in the art should understand that the scope of disclosure involved in the disclosure is not limited to the technical solutions formed by a specific combination of the above-mentioned technical features, but should also cover other technical solutions formed by any combination of the above-mentioned technical features or their equivalent features without departing from the above-mentioned concepts of the disclosure. For example, the above-mentioned features are replaced with the technical features with similar functions disclosed in this disclosure (but not limited to) to form a technical solution.

## Claims

1. A method for WLAN sensing measurement, applied to an access point (AP), comprising:
sending a target radio frame in a process of establishing wireless local area network (WLAN) sensing measurement, wherein the target radio frame carries a WLAN sensing measurement information element, and the WLAN sensing measurement information element indicates identity information of the AP or sounding type information of the WLAN sensing measurement.

2. The method according to claim 1, wherein the identity information comprises indication information of a sensing transmitter and/or a sensing receiver.

3. The method according to claim 2, wherein, in a case that the WLAN sensing measurement information element indicates the identity information of the AP, after sending the target radio frame, the method further comprises:
sending a null data packet (NDP) frame, in a case that the identity information comprises the indication information of the transmitter;
receiving an NDP frame, in a case that the identity information comprises the indication information of the receiver; or
obtaining first sounding order information carried in the WLAN sensing measurement information element and processing sensing sounding based on the first sounding order information, in a case that the identity information comprises the indication information of the transmitter and the receiver.

4. The method according to claim 3, wherein the first sounding order information indicates a processing order of trigger frame (TF) sounding and null data packet announcement (NDPA) sounding.

5. The method according to claim 1, wherein, in a case that the WLAN sensing measurement information element indicates the sounding type information of the WLAN sensing measurement, after sending the target radio frame, the method further comprises:
sending an NDP frame, in a case that the sounding type information comprises NDPA sounding;
receiving an NDP frame, in a case that the sounding type information comprises TF sounding; or
obtaining second sounding order information carried in the WLAN sensing measurement information element and processing sensing sounding based on the second sounding order information, in a case that the sounding type information comprises NDPA sounding and TF sounding.

6. The method according to claim 5, wherein the second sounding order information indicates a processing order of the TF sounding and the NDPA sounding.

7. A method for WLAN sensing measurement, applied to a station (STA), comprising:
receiving a target radio frame in a process of establishing wireless local area network (WLAN) sensing measurement, wherein the target radio frame carries a WLAN sensing measurement information element, and the WLAN sensing measurement information element indicates identity information of the STA or sounding type information of the WLAN sensing measurement.

8. The method according to claim 7, wherein the identity information comprises indication information of a sensing receiver and/or a sensing transmitter.

9. The method according to claim 8, wherein, in a case that the WLAN sensing measurement information element indicates the identity information of the STA, after sending the target radio frame, the method further comprises:
receiving a null data packet (NDP) frame, in a case that the identity information comprises the indication information of the receiver; and
sending an NDP frame, in a case that the identity information comprises the indication information of the transmitter; or
obtaining first sounding order information carried in the WLAN sensing measurement information element and processing sensing sounding based on the first sounding order information, in a case that the identity information comprises the indication information of the transmitter and the receiver.

10. The method according to claim 9, wherein the first sounding order information indicates a processing order of trigger frame (TF) sounding and null data packet announcement (NDPA) sounding.

11. The method according to claim 7, wherein, in a case that the WLAN sensing measurement information element indicates the sounding type information of the WLAN sensing measurement, after sending the target radio frame, the method further comprises:
receiving an NDP frame, in a case that the sounding type information comprises NDPA sounding;
sending an NDP frame, in a case that the sounding type information comprises TF sounding; or
obtaining second sounding order information carried in the WLAN sensing measurement information element and processing sensing sounding based on the second sounding order information, in a case that the sounding type information comprises NDPA sounding and TF sounding.

12. The method according to claim 11, wherein the second sounding order information indicates a processing order of the TF sounding and the NDPA sounding.

13. An access point (AP), comprising:
a sending module, configured to send a target radio frame in a process of establishing wireless local area network (WLAN) sensing measurement, wherein the target radio frame carries a WLAN sensing measurement information element, and the WLAN sensing measurement information element indicates identity information of the AP or sounding type information of the WLAN sensing measurement.

14. A station (STA), comprising:
a receiving module, configured to receive a target radio frame in a process of establishing wireless local area network (WLAN) sensing measurement, wherein the target radio frame carries a WLAN sensing measurement information element, and the WLAN sensing measurement information element indicates identity information of the STA or sounding type information of the WLAN sensing measurement.

15. An apparatus for WLAN sensing measurement, applied to an access point (AP), comprising:
a radio frame sending module, configured to send a target radio frame in a process of establishing wireless local area network (WLAN) sensing measurement, wherein the target radio frame carries a WLAN sensing measurement information element, and the WLAN sensing measurement information element indicates identity information of the AP or sounding type information of the WLAN sensing measurement.

16. An apparatus for WLAN sensing measurement, applied to a station (STA), comprising:
a radio frame receiving module, configured to receive a target radio frame in a process of establishing wireless local area network (WLAN) sensing measurement, wherein the target radio frame carries a WLAN sensing measurement information element, and the WLAN sensing measurement information element indicates identity information of the STA or sounding type information of the WLAN sensing measurement.

17. An electronic device, comprising: a memory, a processor, and a computer program stored on the memory and executable on the processor, wherein when the computer program is executed by the processor, the method according to any one of claims 1 to 12 is implemented.

18. A computer-readable storage medium having stored thereon a computer program that, when executed by a processor, implements the method according to any one of claims 1 to 12.
